Europäisches Patentamt

European Patent Office

Office européen des brevets

(19)

(11) Numéro de publication : **0 314 554 B1**

(12) **FASCICULE DE BREVET EUROPEEN**

(45) Date de publication du fascicule du brevet :
08.01.92 Bulletin 92/02

(51) Int. Cl.⁵ : **C09K 3/30, B65D 83/14**

(21) Numéro de dépôt : **88402668.3**

(22) Date de dépôt : **21.10.88**

(54) **Procédé de conditionnement sous pression d'un fluide, utilisant un système de fermentation engendrant un gaz propulseur, et récipient de conditionnement correspondant.**

(30) Priorité : 30.10.87 FR 8715050

(43) Date de publication de la demande :
03.05.89 Bulletin 89/18

(45) Mention de la délivrance du brevet :
08.01.92 Bulletin 92/02

(84) Etats contractants désignés :
AT BE CH DE ES FR GB GR IT LI NL SE

(56) Documents cités :
FR-A- 2 229 241
FR-A- 2 283 204

(73) Titulaire : **L'OREAL**
**14, Rue Royale**
**F-75008 Paris (FR)**

(72) Inventeur : **Morane, Bruno**
**3bis, boulevard de la Saussaye**
**F-92200 Neuilly (FR)**

(74) Mandataire : **Peuscet, Jacques et al**
**Cabinet Peuscet 68, rue d'Hauteville**
**F-75010 Paris (FR)**

## Description

La présente invention se rapporte à un procédé et à un récipient de conditionnement sous pression d'un fluide liquide ou pâteux, ledit fluide étant mis et distribué sous pression à l'aide d'un gaz propulseur.

Les fluides susceptibles d'être ainsi distribués sont, d'une façon courante, les produits cosmétiques, notamment dans le domaine des soins du corps, comme les déodorants, et de la chevelure, comme les laques; les produits d'entretien, comme les insecticides et les désodorisants d'atmosphère ; ainsi que certains produits pharmaceutiques. Selon les utilisations, la distribution se fait sous forme de crèmes, de mousse, de jets liquides ou d'aérosols.

Les produits propulseurs les plus couramment utilisés sont les hydrocarbures chlorofluorés connus sous la dénomination commerciale "Fréon" et vendus par la Société DU PONT de NEMOURS, par exemple le dichlorodifluorométhane.

Or, pour des raisons de sécurité, aussi bien pendant la fabrication, qu'avant et pendant l'utilisation et pour des raisons de lutte contre la pollution atmosphérique, l'emploi de ces propulseurs, notamment celui des "Fréons", est, à l'heure actuelle, limité ou interdit par les législations de différents pays, ce qui pose le problème de la découverte de nouveaux moyens pour assurer la distribution des fluides ainsi conditionnés sous pression. Par ailleurs, même en l'absence d'une législation interdisant leur emploi, il se pose parfois le problème d'éviter le contact de ces propulseurs avec le produit à distribuer, pour des questions de qualité ou de conformité de celui-ci.

On a déjà proposé d'utiliser, comme gaz propulseur, le gaz carbonique engendré au sein du récipient de conditionnement par la réaction chimique suivante :

$$\text{acide citrique + hydrogénocarbonate} \rightarrow CO_2 + \text{citrate.}$$

Néanmoins, la mise en oeuvre in situ de cette réaction chimique présente des inconvénients sérieux sur le plan pratique.

On a également proposé dans FR-A-2283204 de préparer le gaz carbonique en introduisant dans le produit à distribuer des microorganismes aptes à provoquer une fermentation, avec dégagement, dans le récipient, de gaz carbonique. La fermentation se fait donc dans le produit à distribuer, aux dépens des constituants du produit à distribuer. Ce procédé présente les inconvénients suivants : certains constituants du produit à distribuer ne peuvent être introduits qu'après stabilisation de la pression, car ils seraient susceptibles de nuire au développement des microorganismes. C'est le cas par exemple des parfums ; de compositions comprenant un support non aqueux tel que huile, alcool à forte concentration, huile de silicone ; d'agents de conservation qui ont une action germicide ; d'agents antitranspirants qui sont des chlorhydrates d'aluminium ; d'agents antipelliculaires, d'ammonium quaternaires, de réducteurs (par exemple acide thioglycolique dans les permanentes) ou d'oxydants (par exemple $H_2O_2$ dans les teintures) ; de colorants nitrés ou réactifs. Par ailleurs, le produit devient, au cours de la fermentation, par action de $CO_2$, trop acide pour un usage cosmétologique, par exemple, et il est nécessaire d'ajouter, après fermentation, un agent alcalin. Ces additions ultérieures nécessitent de munir le récipient sous pression d'un dispositif d'introduction compliqué. De plus on a constaté que la fermentation de sucres par des microorganismes produit un gaz carbonique qui est chargé de mauvaises odeurs. Sa présence dans de nombreuses compositions, en particulier dans les compositions cosmétologiques, est, par conséquent, gênante. Par ailleurs le contact direct du fluide à distribuer avec le gaz carbonique propulseur peut conduire à la formation de mousse lorsque le fluide contient, par exemple, un agent tensio-actif.

La présente invention concerne un procédé de conditionnement d'un fluide qui permet d'éviter ces inconvénients.

La présente invention a donc d'abord pour objet un procédé de conditionnement sous pression d'un fluide liquide ou pâteux destiné à être distribué à partir d'un récipient de conditionnement équipé d'une valve de distribution, ledit fluide à distribuer étant mis sous pression au moyen d'un gaz propulseur, procédé selon lequel le gaz propulseur est du gaz carbonique obtenu par fermentation anaérobie d'un système de fermentation contenant des sucres, par des levures, les constituants dudit système de fermentation étant choisis qualitativement et quantitativement pour que le gaz carbonique produit engendre à l'intérieur du récipient de conditionnement une pression apte à assurer la distribution du fluide par ladite valve, caractérisé par le fait que le système de fermentation est contenu dans une enceinte disposée à l'intérieur du récipient.

Dans le système de fermentation, on peut utiliser à titre de sucres aussi bien des sucres simples, comme le glucose, que des sucres complexes comme le saccharose.

En ce qui concerne les levures, on utilise d'une manière générale, celles qui sont les plus aptes à transformer les sucres en alcool et en gaz carbonique dans le milieu réactionnel choisi, qui est notamment un milieu aqueux, ces levures étant de préférence celles appartenant au genre Saccharomyces.

Il peut être également utile d'ajouter, aux constituants de départ du système de fermentation, au moins un agent dopant, avantageusement choisi parmi les vitamines, comme la biotine (vitamine H) et la thiamine (vitamine B1).

Selon un premier mode de mise en oeuvre de la présente invention, on isole complètement le système de fermentation du produit fluide à distribuer. On utilise de préférence comme enceinte dans laquelle on place les constituants de départ du système de fermentation, une poche souple, étanche aux gaz, que l'on ferme de façon hermétique, ladite poche souple étant telle, qu'une fois totalement gonflée, elle soit capable d'occuper un volume au moins égal au volume interne du récipient de conditionnement. Ces poches souples sont, par exemple, décrites dans FR-B-2229241 et FR-A-87-08605. Ce système permet tout aussi bien de distribuer des liquides que des produits de consistance visqueuse à pâteuse comme des crèmes ou des gels.

Selon un second mode de mise en oeuvre, de la présente invention, convenant particulièrement pour la distribution des substances liquides, on utilise, comme enceinte dans laquelle on place les constituants de départ du système de fermentation, un petit réservoir rigide, normalement fermé par une soupape, laquelle est calibrée pour ne s'ouvrir que lorsque la pression qui s'établit dans ledit réservoir dépasse d'une valeur donnée celle régnant dans l'espace intérieur du récipient de conditionnement, ledit réservoir étant lesté pour que la phase liquide du système de fermentation se trouve toujours au-dessous de ladite soupape, quelle que soit la position du récipient de conditionnement.

On pourra également choisir une soupape réglable pour que la pression régnant dans le récipient soit toujours sensiblement égale à une valeur prédéterminée modifiable.

Selon ce mode de réalisation tous les constituants du système de fermentation sont isolés du produit fluide à distribuer, à l'exception du gaz carbonique qui peut se répandre au-dessus et au sein du fluide et venir pressuriser celui-ci. Un tel système trouve avantageusement une application dans la distribution sous forme d'aérosols, de produits contenant des composés susceptibles de nuire aux développements des microorganismes mais pour lesquels les mauvaises odeurs et l'action acidifiante du gaz carbonique ne sont pas gênantes. Parmi ces composés ont peut, par exemple, citer les insecticides.

Selon ce second mode de réalisation, on peut également introduire le récipient rigide dans une enveloppe souple fermée hermétiquement. On évite ainsi que le gaz carbonique ne soit en contact avec le produit distribué, tout en conservant l'avantage de pouvoir régler la pression dans le récipient.

Les expériences décrites ci-après illustrent la possibilité qu'offre la présente invention de régler la pression à une valeur désirée, pouvant atteindre jusqu'à 12 bars environ.

### Mode opératoire général

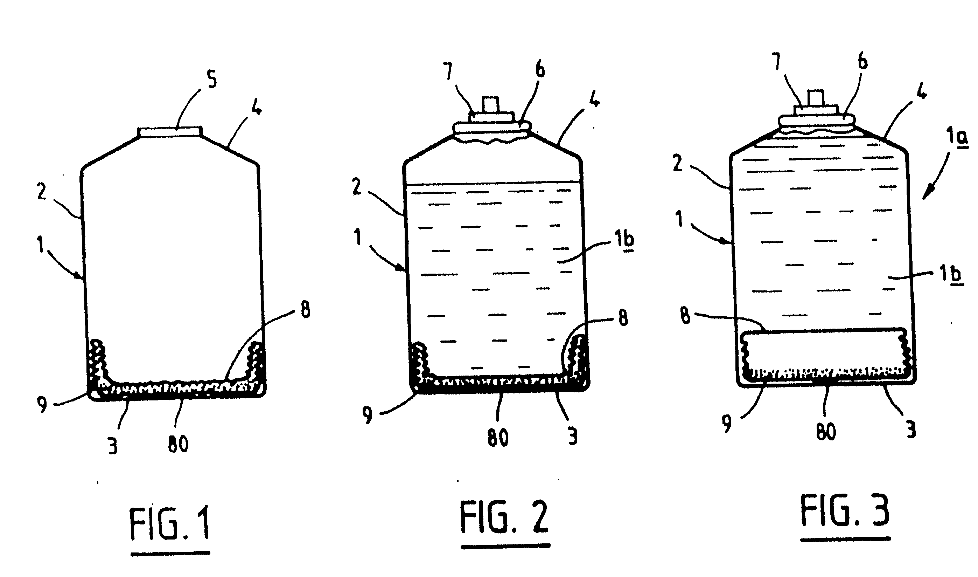

Dans des poches souples identiques, réalisées en un complexe bi-couches aluminium-polyéthylène, capables d'occuper une fois totalement gonflées, un volume de l'ordre de 220 cm$^3$, on introduit une solution aqueuse de sucre, de la levure et, le cas échéant, un agent dopant constitué par la biotine. Les quantités de la solution de sucre, la concentration en sucre, et les quantités de levure et d'agent dopant, qui ont varié d'un essai à l'autre, sont indiquées dans les Tableaux suivants I et II, qui concernent, respectivement, l'emploi, comme sucre, du saccharose et du glucose. On ferme alors hermétiquement chaque poche, et on les dispose chacune dans l'enveloppe extérieure d'un récipient du type "bidon aérosol" d'une capacité de 200 cm$^3$, que l'on remplit à 75% d'eau alcoolisée : on ferme ensuite le récipient par une coupelle équipée de sa valve de distribution, ainsi qu'il sera décrit plus en détail ci-après en référence aux figures 1 à 3.

Pour chaque récipient, on mesure la pression de gaz carbonique en fonction du temps, comme cela est également rapporté dans les Tableaux I et II. En règle générale, au bout d'une durée de l'ordre de 144 heures, la pression finale est atteinte.

On constate également, à partir de ces Tableaux I et II, que l'agent dopant permet notamment de diminuer la quantité de levure utilisée pour une même pression obtenue.

Tableau  I

| Composition du système réactionnel de départ | | | Pression de $CO_2$ en bars après une fermentation de | | | |
|---|---|---|---|---|---|---|
| Quantité de solution saccharosée (g) (Concentration en saccharose (g/l)) | Levure (g) | Agent dopant (g) | 15 h | 42 h | 72 h | 144 h |
| 12 (200) | 1,5 | 1,5 | 5,3 | 9,0 | 10,8 | >11,8 |
| 12 (300) | 1,5 | 0 | 2,3 | 4,3 | 5,7 | 8,8 |
| 12 (300) | 3 | 0 | 3,7 | 6,5 | 8,0 | 11,8 |
| 16 (200) | 1,5 | 0 | 2,0 | 3,8 | 5,0 | 7,8 |
| 16 (200) | 1,5 | 1,5 | 5,4 | 9,2 | >11,3 | >11,8 |

4

# Tableau II

| Composition du système réactionnel de départ | | | Pression de CO₂ en bars après une fermentation de | | | | | |
|---|---|---|---|---|---|---|---|---|
| Quantité de solution glucosée(g) (Concentration en glucose (g/l)) | Levure (g) | Agent dopant (g) | 15 h | 20 h | 42 h | 48 h | 72 h | 144 h |
| 12 (200) | 1 | 0 | | 2,1 | | 3,2 | 4,4 | 6,4 |
| 12 (200) | 1,5 | 0 | | 3,1 | | 4,3 | 5,9 | 8,3 |
| 12 (200) | 1 | 1 | | 4,8 | | 6,9 | 8,1 | 9,7 |
| 12 (200) | 1,5 | 1,5 | | 5,6 | | 8,1 | 9,1 | 10,3 |
| 16 (200) | 1 | 0 | | 1,8 | | 3,1 | 4,3 | 6,9 |
| 16 (200) | 1,5 | 0 | | 2,6 | | 4,3 | 5,4 | 8,4 |
| 16 (200) | 1 | 1 | | 5,9 | | 9,0 | >10,8 | >11,8 |
| 16 (200) | 1,5 | 1,5 | | 6,5 | | 9,6 | >11,8 | >11,8 |
| 16 (200) | 3 | 3 | | 7,6 | | 9,3 | >10,8 | >11,8 |
| 9 (300) | 1,5 | 0 | 1,8 | | 3,2 | | 3,9 | 5,9 |
| 9 (300) | 1,5 | 1,5 | 1,8 | | 7,8 | | 8,8 | 10,5 |
| 14 (200) | 1,5 | 1,5 | 3,5 | | 7,6 | | 8,8 | 10,8 |
| 12 (300) | 1,5 | 0 | 2,2 | | 4,1 | | 5,1 | 7,5 |
| 12 (300) | 3 | 0 | 3,4 | | 5,9 | | 7,3 | 9,2 |
| 24 (200) | 3 | 0 | 2,9 | | 5,7 | | 6,9 | 10,0 |

La présente invention a également pour objet un récipient de conditionnement sous pression d'un fluide liquide ou pâteux, équipé d'une valve de distribution, ledit fluide à distribuer étant mis sous pression au moyen d'un gaz propulseur constitué par du gaz carbonique obtenu par fermentation anaérobie d'un système de fermentation contenant des sucres, par des levures, les constituants dudit système de fermentation étant choisis qualitativement et quantitativement pour que le gaz carbonique produit engendre à l'intérieur du récipient de conditionnement une pression apte à assurer la distribution du fluide par la dite valve, caractérisé par le fait que le système de fermentation est contenu dans une enceinte disposée à l'intérieur du récipient.

Conformément à un premier mode de réalisation, l'enceinte est constituée par une poche souple, étanche aux gaz, hermétiquement fermée, le volume interne libre de ladite poche à l'état gonflé étant au moins égal au volume intérieur du récipient.

Conformément à un second mode de réalisation, l'enceinte est constituée par un petit réservoir rigide, normalement fermé par une soupape calibrée pour ne s'ouvrir que lorsque la pression dans ledit réservoir dépasse d'une valeur donnée celle régnant dans l'espace intérieur du récipient de conditionnement, ledit réservoir étant lesté pour que la phase liquide du système de fermentation se trouve toujours au-dessous de ladite soupape, quelle que soit la position du récipient de conditionnement.

Selon une variante de ce second mode de réalisation on introduit le récipient rigide dans une enveloppe souple fermée hermétiquement.

La pression relative exercée sur le fluide à distribuer est généralement comprise entre $2 \cdot 10^5$ et $8 \cdot 10^5$ Pa environ.

Pour mieux faire comprendre l'objet de la présente invention, on va décrire ci-après, à titre d'exemples purement illustratifs et non limitatifs, deux modes de réalisation représentés sur le dessin annexé.

Sur ce dessin :

— la figure 1 représente, en coupe schématique axiale, un récipient de conditionnement conforme à un premier mode de réalisation, après introduction d'une poche souple à l'intérieur de laquelle se trouvent les constituants de départ du système de fermentation producteur de gaz carbonique et avant introduction du fluide à distribuer ;

— la figure 2 représente, en coupe schématique axiale, le récipient de la figure 1 après introduction du fluide à distribuer et après fermeture de son extrémité libre ;

— la figure 3 représente, en coupe schématique axiale, le récipient de la figure 2, alors que la fermentation s'est développée et a assuré la production de gaz carbonique dans la poche souple, la mise en pression étant réalisée mais la distribution n'ayant pas commencé ;

— la figure 4 représente, en coupe schématique axiale, le récipient de la figure 3 au cours de la distribution du produit conditionné ;

— la figure 5 représente, en coupe schématique axiale, le récipient de la figure 4 en fin de distribution ;

— la figure 6 représente, en coupe schématique axiale, un récipient conforme à un second mode de réalisation de l'invention, dans lequel le système de fermentation producteur de gaz carbonique selon l'invention est placé dans un petit réservoir équipé d'une soupape calibrée ;

— la figure 7 représente une variante du second mode de réalisation selon laquelle le petit réservoir équipé d'une soupape calibrée est contenu dans une enveloppe souple fermée hermétiquement.

En se référant aux figures 1 à 3, on voit que l'on a désigné par 1, dans son ensemble, l'enveloppe extérieure d'un récipient de conditionnement 1a conforme à un premier mode de réalisation de l'invention. Cette enveloppe présente la forme générale d'un cylindre, dont la paroi latérale 2 est fixée à un fond 3, par exemple par sertissage. La partie supérieure 4 de l'enveloppe extérieure a subi une opération de formage qui l'a rendue conique. L'extrémité haute de cette partie supérieure 4 présente une ouverture 5, laquelle, au moins après introduction du moyen de mise sous pression décrit plus loin, sera obturée au moyen d'une coupelle porte-valve 6 sertie sur la bordure libre de la partie 4 et comportant, dans sa zone centrale, une valve 7 permettant la distribution du fluide conditionné et, le cas échéant, l'introduction de ce fluide à l'intérieur du récipient de conditionnement. Le récipient 1a utilisé présente une capacité de 200 cm$^3$.

L'enceinte contenue dans le récipient de conditionnement 1a, est une poche souple 8, réalisée en un matériau en feuille, étanche aux gaz et inerte vis-à-vis du fluide à distribuer, par exemple en polyéthylène ou en un matériau bi-couches ou tri-couches, l'une des couches étant un film d'aluminium et la (ou les) autre(s) couche(s), un film de polyéthylène ou d'une autre matière plastique appropriée ; dans cette poche, on introduit un système de fermentation 9, constitué par un sucre (saccharose ou glucose), une levure capable d'assurer la fermentation anaérobie de ce sucre et, le cas échéant, un agent dopant constitué par une vitamine (biotine ou thiamine, par exemple), le tout se trouvant en milieu aqueux. La poche souple 8, choisie est susceptible d'occuper un volume cylindrique de 220 cm$^3$ de même forme que le récipient 1a, de sorte que la poche gonflée puisse occuper tout l'intérieur du récipient, et, par suite, permette l'évacuation de tout le fluide à distribuer.

Après introduction du système de fermentation 9, la poche 8 est fermée par soudage, de façon à définir une enceinte hermétiquement close. Pendant l'opération de fermeture de la poche souple 8, on peut éventuellement réaliser simultanément un vide au moins partiel à l'intérieur de cette poche, ou bien on peut comprimer ou déformer simultanément cette poche, de sorte que l'air emprisonné à l'intérieur de cette poche, après sa fermeture, soit à une pression inférieure à la pression atmosphérique.

La poche 8, hermétiquement close, est ensuite introduite à l'intérieur de l'enveloppe extérieure 1 du récipient 1a par l'ouverture 5 (figure 1). Des détails supplémentaires concernant notamment la disposition de la poche 8 dans le récipient pourront être trouvés dans FR-A-2229241. Dans la réalisation décrite, la poche 8 est supposée fixée en 80 au fond du récipient de façon à pouvoir gonfler en direction de la coupelle porte-valve 6 du récipient 1a.

Le produit 1b à distribuer est ensuite introduit à l'intérieur du récipient 1a, soit par l'ouverture 5 directement, le récipient étant ensuite obturé dans une phase ultérieure au moyen de la coupelle porte-valve 6, soit par l'intermédiaire de la valve 7, après que cette dernière ait été fixée au récipient par l'intermédiaire de ladite coupelle porte-valve 6 (figure 2).

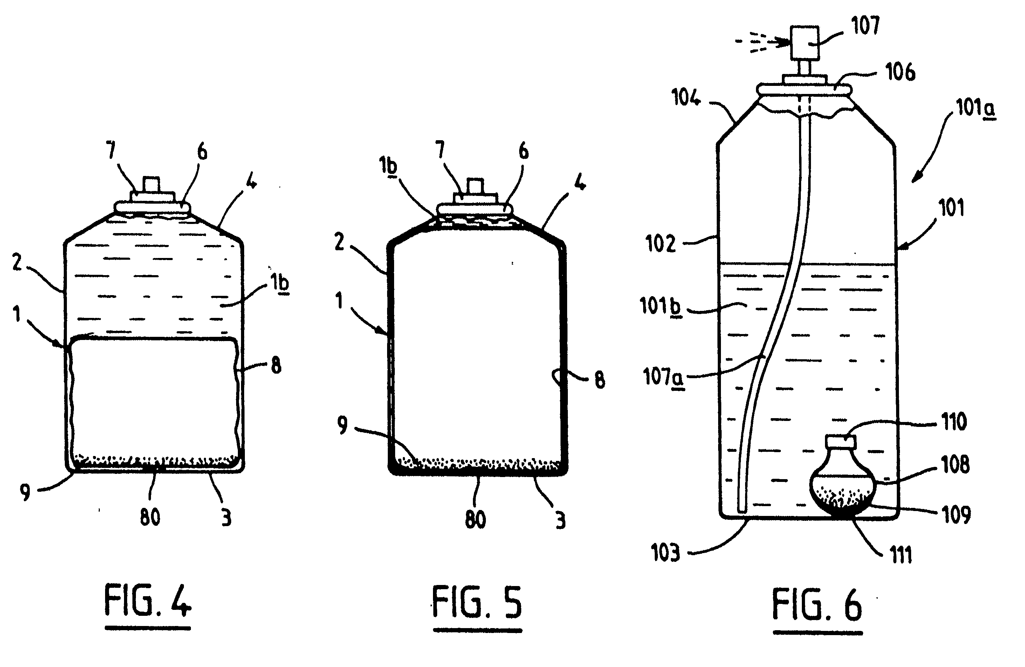

Le gaz carbonique commence alors à se dégager à l'intérieur de la poche, laquelle gonfle, comme cela est représenté sur la figure 3. Au bout d'environ 24 heures, le gaz carbonique remplissant la poche 8 est sous une pression de l'ordre de 2 à 8 bars selon la nature et la quantité du système de fermentation mis en place dans la poche 8. Au fur et à mesure de la distribution, la poche 8 subit une expansion et occupe le volume laissé libre par le produit conditionné 1b éjecté (figure 4). En fin de distribution, la poche 8 occupe tout le volume intérieur du récipient 1a (figure 5).

La figure 6 représente, de façon schématique, un récipient de conditionnement 101a conforme à un second mode de réalisation de l'invention. Les éléments du récipient 1a, qui se retrouvent à l'identique dans le récipient 101a, sont désignés dans ce second cas par des chiffres de référence supérieurs de 100 à ceux utilisés dans le premier cas.

La poche souple 8 est, dans ce cas, remplacée par un petit réservoir rigide 108, que l'on introduit également dans le récipient 101a avant sertissage de la coupelle porte-valve 106. Ce petit réservoir 108 renferme un système de fermentation de départ 109 de même type que le système 9. Ayant la forme générale d'une fiole, le réservoir 108 est obturé par une soupape 110, qui est calibrée pour s'ouvrir pour une différence de pression positive donnée (ΔP), entre l'espace intérieur dudit réservoir 108 et celui du récipient 101a. De plus, le réservoir 108, réalisé en un matériau rigide tel que verre, métal ou plastique, présente, à l'opposé de la soupape 110, un fond 111 qui est lesté, par exemple par plombage, de sorte que, quelle que soit la position du récipient 101a, la phase liquide du système 109, qui se trouve à l'intérieur du réservoir 108, ne puisse s'échapper par la soupape 110, quand celle-ci est en position ouverte.

On peut choisir, par exemple, que la soupape 110 soit calibrée pour ne s'ouvrir que lorsque la différence de pression ΔP est de 4 bars. Lorsque la fermentation se développe au sein du système 109, et que la pression augmente dans le réservoir 108, par suite du dégagement du gaz carbonique, la soupape 110 s'ouvre dès que la pression dans le réservoir 108 dépasse de 4 bars la pression dans le récipient 101a. Initialement, le récipient 101a est à la pression atmosphérique et la soupape 110 s'ouvre donc quand la pression absolue dans le réservoir 108 atteint 5 bars. Le gaz carbonique engendré par le système 109 passe ainsi progressivement dans le récipient 101a, dont la pression interne s'accroît en restant toujours inférieure de 4 bars à celle qui règne dans le réservoir 108. Lorsqu'on appuie sur la valve 107, on obtient un aérosol qui est un mélange du fluide à distribuer et de gaz carbonique ; la pression dans le récipient 101a décroît en raison de la distribution ce qui provoque une réouverture de la soupape 110 : l'intérieur du récipient se recharge en gaz carbonique.

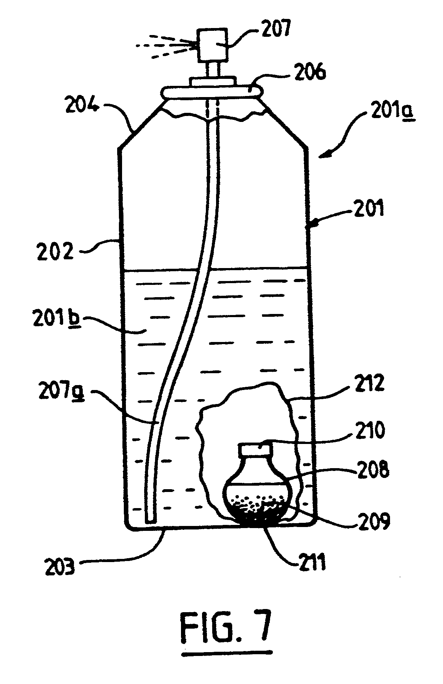

La figure 7 représente, de façon schématique, un récipient de conditionnement 201a conforme à une variante du second mode de réalisation. Les éléments du récipient 101a qui se retrouvent à l'identique dans le récipient 201a, sont désignés par des chiffres de référence supérieurs de 100 à ceux utilisés. Selon cette variante le petit réservoir 208, qui renferme un système de fermentation de départ 209 est contenu dans une enveloppe 212 en matière souple élastique du même type que celle utilisée dans le premier mode de réalisation représenté sur les figures 1 à 5.

## Revendications

1. Procédé de conditionnement sous pression d'un fluide liquide ou pâteux destiné à être distribué à partir d'un récipient de conditionnement (1a ; 101a ; 201a) équipé d'une valve de distribution (7 ; 107 ; 207), ledit fluide à distribuer (1b ; 101b ; 201b) étant mis sous pression au moyen d'un gaz propulseur, procédé suivant lequel le gaz propulseur est du gaz carbonique obtenu par fermentation anaérobie d'un système (9 ; 109 ; 209) de fermentation des sucres par des levures, les constituants dudit système de fermentation (9 ; 109 ; 209) étant choisis qualitativement et quantitativement pour que le gaz carbonique produit engendre à l'intérieur du récipient de conditionnement (1a ; 101a ; 201a) une pression apte à assurer la distribution du fluide (1b ; 101b ; 201b) par ladite valve (7 ; 107 ; 207),caractérisé par le fait que le système de fermentation est contenu dans une enceinte (8 ; 108 ; 208) disposée à l'intérieur du récipient.

2. Procédé selon la revendication 1, caractérisé par le fait qu'on utilise, comme sucres, des sucres simples, comme le glucose, ou des sucres complexes, comme le saccharose, en milieu aqueux.

3. Procédé selon l'une des revendications 1 et 2, caractérisé par le fait qu'on utilise des levures appartenant au genre Saccharomyces.

4. Procédé selon l'une des revendications 1 à 3, caractérisé par le fait qu'on ajoute, aux constituants de départ du système de fermentation (9 ; 109 ; 209), au moins un agent dopant, choisi notamment parmi les vitamines, comme la biotine et la thiamine.

5. Procédé selon l'une des revendications 1 à 4, caractérisé par le fait qu'on utilise, comme enceinte dans laquelle on place les constituants de départ du système de fermentation (9), une poche souple (8), étanche aux gaz, que l'on ferme ensuite de façon hermétique, ladite poche souple (8) étant telle qu'une fois totalement gonflée, elle soit capable d'occuper un volume au moins égal au volume interne du récipient de conditionnement (1a).

6. Procédé selon l'une des revendications 1 à 4, permettant de distribuer des substances liquides, caractérisé par le fait qu'on utilise, comme enceinte dans laquelle on place les constituants de départ du système de fermentation (109), un petit réservoir rigide (108), normalement fermé par une soupape (110), laquelle est calibrée pour ne s'ouvrir que lorsque la pression qui s'établit dans ledit réservoir (108) dépasse d'une valeur donnée celle régnant dans l'espace intérieur du récipient de conditionnement (101a), ledit réservoir (108) étant lesté pour que la phase liquide du système de fermentation (109) se trouve toujours au-dessous de ladite soupape (110), quelle que soit la pression du récipient de conditionnement (101a̲).

7. Procédé selon la revendication 6, caractérisé par le fait que l'on utilise, comme enceinte dans laquelle on place les constituants de départ du système de fermentation (209), un petit réservoir rigide (208) lui-même contenu dans une enveloppe souple (212) fermée hermétiquement.

8. Récipient de conditionnement sous pression d'un fluide liquide ou pâteux, équipé d'une valve de distribution (7 ; 107 ; 207), ledit fluide à distribuer (1b̲ ; 101b̲ ; 201b̲) étant mis sous pression au moyen d'un gaz propulseur constitué par du gaz carbonique obtenu par fermentation anaérobie d'un système (9 ; 109 ; 209) de fermentation contenant des sucres, par des levures, les constituants dudit système de fermentation (9 ; 109 ; 209) étant choisis qualitativement et quantitativement pour que le gaz carbonique produit engendre à l'intérieur du récipient de conditionnement (1a̲ ; 101a̲ ; 201a̲) une pression apte à assurer la distribution du fluide (1b̲ ; 101b̲ ; 201b̲) par ladite valve (7 ; 107 ; 207), caractérisé par le fait que le système de fermentation est contenu dans une enceinte (8 ; 108 ; 208) disposée à l'intérieur du récipient.

9. Récipient selon la revendication 8, caractérisé par le fait que l'enceinte est constituée par une poche souple (8), étanche au gaz, hermétiquement fermée, le volume interne libre de ladite poche (8) à l'état totalement gonflé étant au moins égal au volume intérieur du récipient (1a̲).

10. Récipient selon la revendication 9, caractérisé par le fait que l'on utilise, comme enceinte dans laquelle on place les constituants de départ du système de fermentation (209), un petit réservoir rigide (208) lui-même contenu dans une enveloppe souple (212) fermée hermétiquement.

11. Récipient selon la revendication 8, caractérisé par le fait que l'enceinte est constituée par un petit réservoir rigide (108), normalement fermé par une soupape (110) calibrée pour ne s'ouvrir que lorsque la pression dans ledit réservoir (108) dépasse d'une valeur donnée celle régnant dans l'espace intérieur du récipient (101a̲) ledit réservoir (108) étant lesté pour que la phase liquide du système de fermentation (109) se trouve toujours au-dessous de ladite soupape (110), quelle que soit la position du récipient de conditionnement (101a̲).

12. Récipient selon l'une des revendications 8 à 10, caractérisé par le fait que la pression relative exercée sur le fluide à distribuer est comprise entre $2 \cdot 10^5$ et $8 \cdot 10^5$ Pa environ.

## Patentansprüche

1. Verfahren zur Druck-Konditionierung eines flüssigen oder pastösen Fluids, vorgesehen zur Verteilung aus einem, mit einem Verteilventil (7 ; 107 ; 207) versehenen Konditioniergefäß (1a̲ ; 101a̲ ; 201a̲), wobei das zu verteilende Fluid (1b̲ ; 101b̲ ; 201b̲) mittels eines Treibgases unter Druck gesetzt wird, bei dem das Treibgas Kohlendioxid ist, erhalten durch anaerobe Fermentation mit einem Fermentationssystem (9 ; 109 ; 209) aus Zuckern und Hefen, wobei die Komponenten des Fermentationssystems (9 ; 109 ; 209) qualitativ und quantitativ so gewählt werden, daß das erzeugte Kohlendioxid im Inneren des Konditioniergefäßes (1a̲ ; 101a̲ ; 201a̲) einen Druck entwickelt, der geeignet ist, die Verteilung des Fluids (1b̲ ; 101b̲ ; 201b̲) durch das Ventil (7 ; 107 ; 207) sicherzustellen, **dadurch gekennzeichnet,** daß das Fermentationssysten in einem im Inneren des Gefäßes angeordneten Behältnis (8 ; 108 ; 208) enthalten ist.

2. Verfahren nach Anspruch 1, dadurch gekennzeichnet, daß man als Zucker einfache Zucker, wie Glukose, oder komplexe Zucker, wie Saccharose, in wäßrigem Milieu verwendet.

3. Verfahren nach einem der Ansprüche 1 und 2, dadurch gekennzeichnet, daß man zur Gattung der Saccharomyceten gehörende Hefen verwendet.

4. Verfahren nach einem der Ansprücbe 1 bis 3, dadurch gekennzeichnet, daß man zu den Ausgangskomponenten des Fermentationssystems (9 ; 109 ; 209) mindestens einen Ergänzungsstoff hinzufügt, ausgewählt aus den Vitaminen, wie dem Biotin und dem Thiamin.

5. Verfahren nach einem der Ansprüche 1 bis 4, dadurch gekennzeichnet, daß man als Behältnis, in das man die Ausgangskomponenten des Fermentationssystems (9) einbringt, eine flexible gasdichte Tasche (8) verwendet, die man sodann hermetisch verschließt, wobei die Tasche (8) derart ist, daß sie, einmal vollständig aufgeblasen, imstande ist, ein Volumen auszufüllen, das wenigstens gleich dem Innenvolumen des Konditioniergefäbes (1a̲) ist.

6. Verfahren nach einem der Ansprüche 1 bis 4, das die Verteilung flüssiger Substanzen erlaubt, dadurch gekennzeichnet, daß man als Behältnis, in das man die Ausgangssubstanzen des Fermentationssystems (109) einbringt, ein kleines starres Reservoir (108) verwendet, das normalerweise durch ein Ventil (110) verschlossen ist, welches so eingestellt ist, daß es sich erst öffnet, wenn der Druck, der sich in dem Reservoir (108) einstellt, um einen vorgegebenen Wert den im Inneren des Konditioniergefäbes (101a̲) herrschenden überschreitet, wobei das Reservoir (108) beschwert ist, damit sich die flüssige Phase des Fermentationssystems (109) immer unterhalb des Ventils (110) befindet, was auch der Druck des Konditioniergefäbes sein mag.

7. Verfahren nach Anspruch 6, dadurch gekennzeichnet, daß man als Behältnis, in das man die Ausgangskomponenten des Fermentationssystems (209) einbringt, ein kleines starres Reservoir (208) verwendet, das selbst in einer flexiblen hermetisch verschlossenen Hülle (212) enthalten ist.

8. Gefäß zur Druck-Konditionierung eines flüssigen oder pastösen Fluids, versehen mit einem Verteilventil (7 ; 107 ; 207), wobei das zu verteilende Fluid (1b ; 101b ; 201b) mittels eines Treibgases unter Druck gesetzt ist, welches aus Kohlendioxid, gewonnen durch anaerobe Fermentation mit einem Fermentationssystem (9 ; 109 ; 209) aus Zuckern und Hefen, besteht, wobei die Komponenten des Fermentationssystems (9 ; 109 ; 209) qualitativ und quantitativ so gewählt sind, daß das erzeugte Kohlendioxid im Inneren des Konditioniergefäßes (1a ; 101a, 201a) einen Druck entwickelt, der geeignet ist, die Verteilung des Fluids (1b ; 101b ; 201b) durch das Ventil (7 ; 107 ; 207) sicherzustellen, dadurch gekennzeichnet, daß das Fermentationssystem in einem im Inneren des Gefäßes angeordneten Behältnis (8 ; 108 ; 208) enthalten ist.

9. Gefäß nach Anspruch 8, dadurch gekennzeichnet, daß das Behältnis aus einer flexiblen, gasgefüllten, hermetisch verschlossenen Tasche (8) besteht, wobei das freie Innenvolumen der Tasche (8) im völlig aufgeblasenen Zustand mindestens gleich dem Innenvolumen des Gefäßes (1a) ist.

10. Gefäß nach Anspruch 9, dadurch gekennzeichnet, daß man als Behältnis, in das man die Ausgangskomponenten des Fermentationssystem (209) einbringt, ein kleines starres Reservoir (208) verwendet, das selbst in einer flexiblen, hermetisch verschlossenen Hülle (212) enthalten ist.

11. Gefäß nach Anspruch 8, dadurch gekennzeichnet, daß das Behältnis aus einem kleinen starren Reservoir (108) besteht, das normalerweise durch ein Ventil (110) verschlossen ist, welches so eingestellt ist, daß es sich erst öffnet ; wenn der Druck im Reservoir (108) um einen vorgegebenen Wert den im Inneren des Gefäßes (101a) herrschenden überschreitet, wobei das Reservoir (108) beschwert ist, damit sich die flüssige Phase des Fermentationssystems (109) immer unterhalb des Ventils (110) befindet, was auch die Stellung des Konditioniergefäßes (101a) sein mag.

12. Gefäß nach einem der Ansprüche 8 bis 10, dadurch gekennzeichnet, daß der auf das zu verteilende. Fluid wirkende Relativdruck ungefähr zwischen $2 \cdot 10^5$ und $8 \cdot 10^5$ Pa beträgt.

## Claims

1. Method for packaging under pressure a liquid or pasty fluid intended to be dispensed from a packaging container (1a ; 101a ; 201a) equipped with a dispensing valve (7 ; 107 ; 207), the said fluid to be dispensed (1b ; 101b ; 201b) being pressurised by means of a propellent gas, in which method the propellent gas is carbon dioxide obtained by anaerobic fermentation of a system (9 ; 109 ; 209) for fermentation of sugars by yeasts, the components of the said fermentation system (9 ; 109 ; 209) being chosen qualitatively and quantitatively so that the carbon dioxide produced creates, inside the packaging container (1a ; 101a ; 201a), a pressure capable of ensuring the dispensing of the fluid (1b ; 101b ; 201b) by the said valve (7 ; 107 ; 207), characterised in that the fermentation system is contained in a chamber (8 ; 108 ; 208) placed inside the container.

2. Method according to Claim 1, characterised in that the sugars used are simple sugars such as glucose or complex sugars such as sucrose, in an aqueous medium.

3. Method according to one of Claims 1 and 2, characterised in that use is made of yeasts belonging to the genus Saccharomyces.

4. Method according to one of Claims 1 to 3, characterised in that at least one doping agent chosen, in particular, from the vitamins, such as biotin and thiamine, is added to the starting components of the fermentation system (9 ; 109 ; 209).

5. Method according to one of Claims 1 to 4, characterised in that use is made, as a chamber in which the starting components of the fermentation system (9) are placed, of a flexible gastight pouch (8) which is then sealed hermetically, the said flexible pouch (8) being such that, once fully inflated, it is capable of occupying a volume which is at least equal to the internal volume of the packaging container (1a).

6. Method according to one of Claims 1 to 4, permitting dispensing of liquid substances, characterised in that use is made, as a chamber in which the starting components of the fermentation system (109) are placed, of a small rigid reservoir (108), normally closed by a valve (110) which is calibrated so as to open only when the pressure established in the said reservoir (108) exceeds that prevailing in the internal space of the packaging container (101a) by a given value, the said reservoir (108) being ballasted so that the liquid phase of the fermentation system (109) is always below the said valve (110) regardless of the pressure of the packaging container (101a).

7. Method according to Claim 6, characterised in that use is made, as a chamber in which the starting components of the fermentation system (209) are placed, of a small rigid reservoir (208) which is itself contained in a hermetically sealed flexible envelope (212).

8. Container for packaging under pressure a liquid or pasty fluid, equipped with a dispensing valve (7 ; 107; 207), the said fluid to be dispensed (1b ; 101b : 201b) being pressurised by means of a propellent gas consisting of carbon dioxide obtained by anaerobic fermentation of a fermentation system (9 ; 109 ; 209) containing sugars, by yeasts, the components of the said fermentation system (9 ; 109 ; 209) being chosen qualitatively and quantitatively so that the carbon dioxide produced creates, inside the packaging container (1a ; 101a ; 201a), a pressure capable of ensuring the dispensing of the fluid (1b ; 101b ; 201b) by the said valve (7 ; 107; 207), characterised in that the fermentation system is contained in a chamber (8 ; 108 ; 208) placed inside the container.

9. Container according to Claim 8, characterised in that the chamber consists of a flexible gastight pouch (8) which is hermetically sealed, the free internal volume of the said pouch (8) in the fully inflated state being at least equal to the inside volume of the container (1a).

10. Container according to Claim 9, characterised in that use is made, as a chamber in which the starting components of the fermentation system (209) are placed, of a small rigid reservoir (208) which is itself contained in a hermetically sealed flexible envelope (212).

11. Container according to Claim 8, characterised in that the chamber consists of a small rigid reservoir (108) which is normally closed by a valve (110) calibrated so as to open only when the pressure in the said reservoir (108) exceeds that prevailing in the internal space of the container (101a) by a given value, the said reservoir (108) being ballasted so that the liquid phase of the fermentation system (109) is always below the said valve (110) regardless of the position of the packaging container (101a).

12. Container according to one of Claims 8 to 10, characterised in that the relative pressure exerted on the fluid to be dispensed is approximately between $2 \times 10^5$ and $8 \times 10^5$ Pa.

FIG. 1    FIG. 2    FIG. 3

EP 0 314 554 B1

FIG. 4

FIG. 5

FIG. 6

EP 0 314 554 B1

**FIG. 7**